# EUROPEAN PATENT APPLICATION

(11) **EP 0 958 850 A1**
(43) Date of publication of application: **24.11.1999**
(21) Application number: 98303985.0
(22) Date of filing: 20.05.1998
(51) Int. Cl.: B01D 35/10

(54) **Apparatus for water treatment**

(71) Applicant: Hozelock Limited, Aylesbury, Buckinghamshire HP17 8JD (GB)
(72) Inventor: Goodson, Malcolm Graham, Peterborough, Cambridgeshire, PE6 9RE (GB); Marston,, Kevin, Aylesbury, Buckinghamshire, HP19 3GF (GB)
(74) Representative: Morton, Colin David

(57) **Abstract**

A filter for filtering water in ponds or aquaria has a plurality of filamentary filter elements (12) of a synthetic plastics material. The filter elements (12) are like the bristles of a brush and are mounted on a mounting member (14) by means of a U-shaped clip (16), with the option of a further clip (16) retaining the depending ends of the bristles. The elements (12) serve as a primary mechanical and biological filter in a filter assembly.

## Description

This invention relates to apparatus for water treatment. The invention is particularly, but not exclusively, applicable to the treatment of water used in ponds, aquaria and fish farming. The invention may also be applicable to the treatment of water from other sources, for example waste water treatment plants.

Prior proposals in relation to filtration units for water treatment for ponds and aquaria commonly comprise moulded plastic containers and including filtration media such as filter brushes and open-cell foam.

In one example of a filtration unit, pond water enters the unit through the inlet of a moulded container. The water is then directed over, or through, a series of vertically positioned brush filters and subsequently through a further filtration medium comprising open-cell foam. The filtered water is then delivered to the pond through an outlet positioned in the base of the unit.

Circular twisted wire brushes have been widely used as brush filters in pond water filtration units for many years. Such brushes comprise a central core, or spine, of wire with a plurality of bristles, or filaments, projecting, or radiating, therefrom. These brush filters not only encourage flocculation of the solids within the water, but also serve as a primary mechanical and biological filter to remove coarse and medium sized solids, prior to secondary filtration by the foam cartridges.

The foam material also provides an effective mechanical and biological filter. However, one common problem arising from such systems is that the pores within the foam material can quickly become blocked by the growth of the microorganisms which arise from the purification process, and also by solids contained in the liquid being treated. As a result, the flow of liquid through the open-cell material is subjected to rapidly increasing resistance, and in due course the water treatment material becomes blocked and treatment ceases.

It is therefore important that the brush filters work as effectively as possible to remove the maximum amount of solids from the water before it reaches the finer filter of the foam material. In current apparatus, the cleaning of the foam cartridges represents a high proportion of the maintenance of the water treatment apparatus.

Currently used twisted wire brushes, although reasonably effective as a primary filter, suffer from the disadvantage that they are difficult to clean, and are prone themselves to blockage, particularly in the region or the central wire core. In addition, such brushes are relatively expensive to manufacture, and furthermore they occupy a relatively large area within the filter apparatus, having regard to the effectiveness of filtration provided.

Thus, a need exists for a method and apparatus for water treatment which requires reduced routine maintenance, provides for a greater ease of cleaning, and which maximises the effectiveness of filtration per unit area of space occupied.

Accordingly it is an object of the present invention to provide apparatus for water treatment which provides improved filtration of water and/or which attempts to reduce the maintenance of the system and/or provides improvements in relation to one or more matters discussed herein, or generally.

According to the present invention, there is provided a water treatment element which is more accessible for cleaning purposes and/or space efficient than prior art twisted wire brushes.

In one aspect of the invention there is provided a filtration element in the form of a linear, or strip, filamentary filter The water treatment element comprises a plurality of filamentary elements extending in generally parallel planes, and mounted upon a mounting element. The filamentary elements extend substantially normal, or transversely, to the longitudinal axis of an elongate mounting element.

The linear filamentary filter may comprise a plurality of filamentary elements mounted over an elongate rod, and held in place with an elongate clip or holding member, which may comprise a generally U-shaped extrusion. The filaments may comprise bristles of a plastics material.

The mounting element may be configured in a substantially linear form, or it may be configured into an alternative shape, for example a curve, according to the particular nature of the application of the filter element.

The clip member may be adapted to provide mounting means for locating the filamentary filter means within the filtration unit, thereby obviating the need for a separate brush hanger as required with twisted wire brushes.

In an embodiment, the one or more linear filamentary filters may be mounted within a filtration unit to serve as a primary mechanical and biological filter, replacing prior art arrangements of circular twisted wire brushes.

It has been found that in prior art apparatus, where flow is at right angles to the axis of circular twisted wire brush filters, only 50% to 60% of the brush surfaces, namely the leading surface, or front face of the brush, are totally effective in terms of mechanical filtration. Thus the rear half of the brush filter whilst being effectively redundant, occupies a significant amount of space within the filtration unit. In contrast, in apparatus using linear, or strip, filamentary filters, practically the entire brush surfaces act as an effective mechanical filter. In this way, a more effective filtration medium may be provided in which a greater proportion of matter within the water being treated is removed before passing through the finer secondary filtration medium. This results in an extended period before the secondary filtration medium requires cleaning, and thus reduced maintenance, when compared to prior art apparatus.

In addition, by providing a linear, or strip, filamentary filter as a primary filter, the space occupied by the primary filter is significantly less, relative to the space occupied by conventional twisted wire brush filters.

Furthermore, it has been found that a linear filamentary filter according to the present invention is significantly less expensive to manufacture than a comparable twisted wire brush filter, and has the advantage that it is also easier to clean, as the bristles in the region of the clip member are much more readily accessible than the bristles in the region of the central wire core of conventional brush filters.

It is envisaged that the density, the length and thickness of the filamentary elements may be varied and optimised according to the conditions of the water to be treated. It is also envisaged that these parameters may be varied along the length of the linear filter. A sufficient density of filaments, or bristles, must be provided to ensure that all the flow passes through the brush matrix, causing eddy current formation, particle-to-particle contact and flocculation, the solids then becoming entrained within the brush matrix.

In an embodiment there is provided apparatus for water treatment comprising a container having an inlet and an outlet for ingress and egress of water from and to the body of water to be treated, for example a pond or aquarium; and a primary filter medium provided within said container; characterised in that said primary filter media comprises one or more linear filamentary filter elements as herein before described.

The linear filamentary filter may be mounted with the longitudinal axes of the filamentary elements substantially at right angles to the direction of flow of the water to be treated. However for linear flow, the filamentary filter is best held at an angle to the direction of flow, for example, with the filamentary elements angled at between approximately 30° and 60°, and preferably 45°, to the direction of flow. In this way the tendency for the linear filter to rotate to align itself with the direction of flow is reduced.

In a further aspect of the invention there is provided a filamentary filter element which is openable, or extendable, between an in-use configuration and a cleaning configuration. In such an arrangement, the filamentary elements are mounted upon an openable, extendable, or extensible, mounting element.

In an embodiment, there is provided a filter element comprising a plurality of filamentary elements mounted upon a coiled mounting element. In one embodiment, the mounting element provides a hollow within the coils, and is of a generally cylindrical form. A generally helical, or spiral, mounting element may be provided. A filamentary filter of this type may be manufactured by coiling a linear filamentary filter strip, as previously described.

The filamentary elements may extend radially outwardly or radially inwardly from the mounting element.

In one embodiment, the filamentary filter takes the form of a compressed coil, with adjacent spirals in close proximity to each other. However, it is preferred for some applications, particularly if the flow of water is substantially along the longitudinal axis of the filaments, that the mounting element is in the form of a slightly expanded, resilient, coil having a given pitch.

In this way, such an arrangement may be slightly compressed during use, but when removed for routine maintenance, the coil expands, separating the adjacent coils of bristles. It has been found that such an arrangement has the advantage of facilitating cleaning of the filamentary elements, particularly in the region adjacent the mounting, which has always proved difficult in prior art twisted wire brush filters.

In an embodiment, a secondary filtration medium may be provided within the hollow formed within the centre of the coil. The secondary filtration medium may take the form of an open-cell foam cartridge. In this way, the space within the filtration unit is fully utilised, and the maximum filtration per unit area of space occupied is obtained.

In an embodiment there is provided apparatus for water treatment comprising a container having an inlet and an outlet for ingress and egress of water from and to the body of water to be treated, for example a pond or aquarium; and a primary filter medium provided within said container; characterised in that said primary filter media comprises a filamentary filter element comprising a plurality of filamentary elements mounted upon an extendable mounting element.

In one embodiment, the primary filter medium with the filter unit comprises a single coiled filamentary filter, optionally with an open-cell foam cartridge located within the hollow formed by the spiral mounting element. Alternatively, a plurality of discrete cylindrical filamentary filter brushes having a hollow central spine, or core, may be provided. The filter brushes may be arranged such that the filaments of adjacent filters intermesh with those of the adjacent ones. In this way the density of the filter media may be controlled.

In an embodiment the open-cell foam filter cartridge is shaped to fit exactly within the hollow formed at the centre of the coil. In an alternative embodiment, the foam cartridge is shaped to provide a by-pass, or over-flow route for the water, if the pores of the foam become so blocked with matter that water cannot escape through the walls of the cartridge to the outlet in the usual way. In this way, problems such as undue back pressure on the pump are limited, and continuity of circulation within the system is maintained.

In yet a further aspect of the invention, thee is provided a filter element in which the filamentary elements are not provided continuously around the mounting element, but rather discrete tufts, or clumps, of filamentary elements are provided around a central mounting or shaft. Each row of clumps, or tufts, may be staggered with respect to the adjacent rows. The central shaft may also comprise a hollow cylindrical cavity, in which a secondary filtration media may be mounted. In this embodiment it is possible to stagger tufts of filaments at 90° to the axis of flow, promoting eddy currents and thus optimising the flocculation effects.

In an embodiment, the water being treated flows through a sedimentation tank prior to passing through the primary and secondary filter media. This significantly reduces the amount of solids and pollution in the water, and thus eases the load on the subsequent filtration stages.

A vortex sedimentation chamber, such as that described in GB 2213811A may be provided. In an alternative embodiment, the container for the primary and secondary filter media comprises an integral sedimentation unit. In this embodiment the container may taper conically in its lower portion to create conditions favourable for efficient settlement.

Embodiments of the invention will now be described by way of example with reference to the accompanying drawings in which:
**Figure 1** is a cross-sectional view of a linear filamentary filter according to one embodiment of the present invention;
**Figures 2a and 2b** are diagrammatic views showing two possible arrangements of the filter of Figure 1;
**Figure 2c** is a diagrammatic view showing a modified filter arrangement;
**Figure 3** illustrates an annular filter according to the invention,
**Figure 4** is a cross-sectional view of a filter assembly incorporating the filter of Figure 2a,
**Figure 5** is a perspective view, partially cut away to slow internal detail, of a further filter assembly, and
**Figure 6** is a sectional view of the assembly of Figure 5.

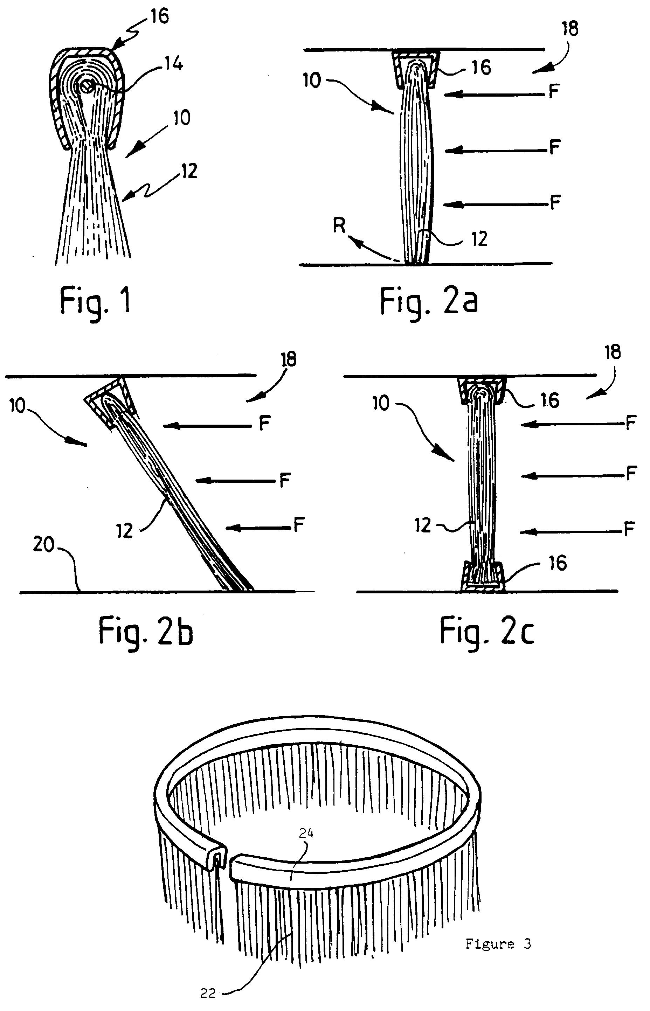

As seen in Figure 1, a linear, or strip filamentary filter 10 according to one embodiment of the present invention comprises a plurality of filamentary elements, in the form of bristles 12. The bristles 12 are folded over an elongate wire member 14 about their mid points, and are retained in place by an elongate retaining member, forming a clip 16. The clip 16 is in the form of a generally U-shaped extrusion, tapered inwardly at its free ends.

The clip member 16 may extend past the bristles 12 at each end (not shown) to provide mounting means for locating the filter 10 within the filtration unit, thereby obviating the need for a separate brush hanger.

As seen in Figure 2a, the linear brush filter 10 of Figure 1 may be mounted in the inlet flow 18 of a water treatment container, the bristles extending in substantially parallel directions and presenting a curtain of bristles to the water flow F. The length of the bristles 12 is chosen such that the brush filter 10 extends the entire height of the inlet, in order that all the water to be treated passes through the filter. The brush filter 10 is mounted in the container such that the inlet flow F is in a direction normal to the longitudinal axes of the bristles 12. However, if the flow of water F is too strong, the filter 10 may try to rotate in a direction R, particularly when it has become blocked with solid matter.

Figure 2b shows a variation of the arrangement of Figure 2a in which the brush filter 10 is mounted at an angle of about 45° to the direction of flow F. In this arrangement, the length of the bristles 12 is slightly longer than the height of the inlet. In this way, as the filter bristles 12 becomes blocked with solid matter and the filter brush 10 tries to rotate, the bristles drag along the floor 20 of the inlet, and the resultant force between the bristles 12 and the floor 20 serves to resist further rotation.

The filter 10 of Figure 2c is similar to that of Figure 2a, except that in the case of Figure 2c the depending ends of the bristles 12 are received in a further clip 16, so that each edge of the filter has a clip 16. Such a filter is particularly suitable to be used as a cartridge filter which can be readily slid into position in a flow duct or passage, possibly being retained therein by guides such as channels, and then being slidably removed for replacement or cleaning. The second clip 16 embracing the bristle ends also acts to prevent the bristles being deflected by the water flow. Each clip has converging side flanges providing a spring action which embraces the bristles at their fold over the wire member 14 or at their depending ends.

If clips with a firm retention on the bristles are used, it may be possible to dispense with a wire mounting 14, using the clips 16 as mountings. This possibility applies to filters with both a single clip 16 (Figures 2a and 2b) or a double clip 16 (Figure 2c).

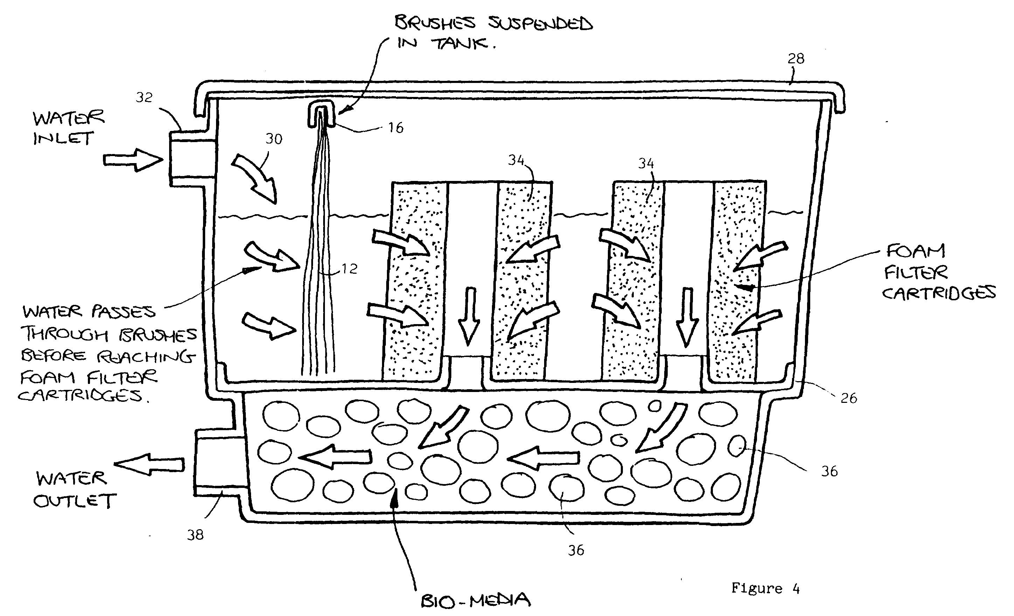

In Figure 3, the curtain of brush bristles 22 is circular, depending from a circular or substantially circular clip 24 of U-section the spaced limbs of which embrace the tops of the bristles 22. The water flow is arranged to be radial, either radially inwardly or radially outwardly, so as to be generally at right angles to the direction of elongation of the bristles 22. The lower ends of the bristles, remote from the clip 24, may hang free or may be retained by a circular clip, similar to the lower clip 16 in Figure 2(c).

Figure 4 illustrates a practical embodiment of filter assembly incorporating the filter of Figure 2a. A generally rectangular casing has a container portion 26 and a detachable lid portion 28. The container portion has a water inlet 32 and a water outlet 38. The container portion 26 has means, not shown, which support opposite ends of the clip 16 so that the depending curtain of bristles 12 hangs down into the container portion for the complete height thereof, to present a primary mechanical filter which removes larger solid particles from an incoming water flow, represented by arrows 30, which enters the container portion 26 by the inlet 32. After passing through the curtain of bristles 12, the water is further filtered by a secondary filter in the form of open-cell foam cartridges 34, before passing through bio-media 36 in the base of the container portion 26 and leaving by means of the outlet 38. The bio-media 36 is housed in a lower compartment of the container portion 26.

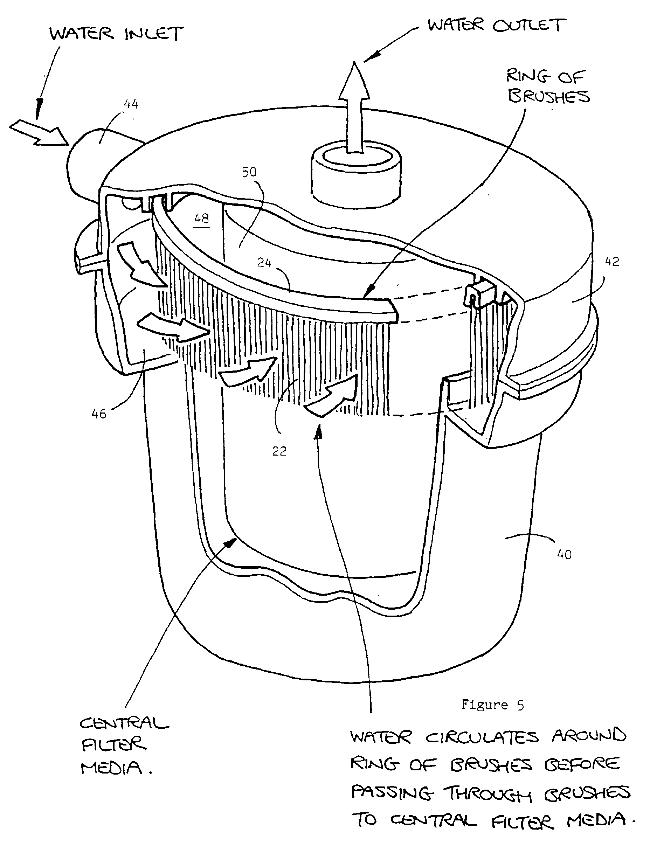

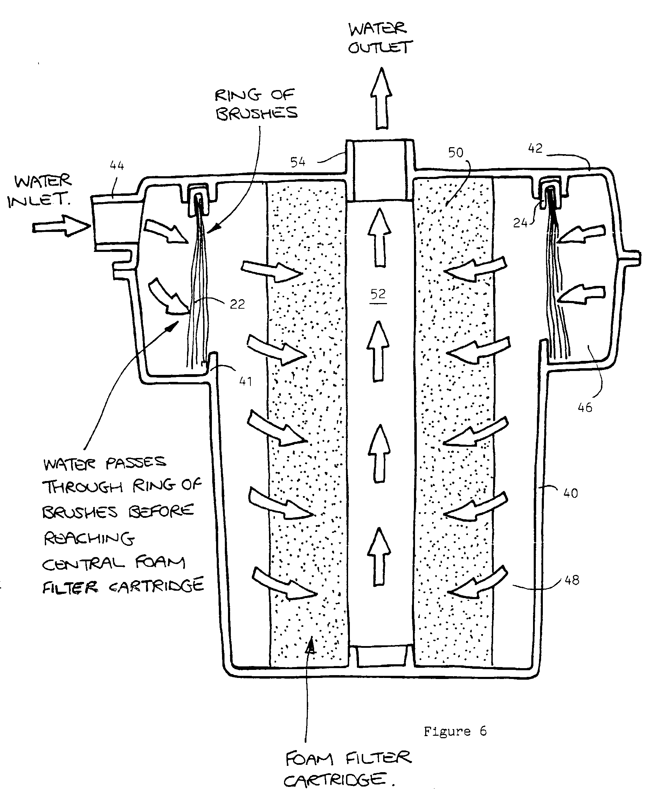

Figures 5 and 6 illustrate a practical embodiment of filter assembly incorporating the annular filter of Figure 3. The casing has a generally cylindrical container portion 40 the upper end of which is closable by a removable lid 42 of generally circular shape. Water enters the container portion by a radial inlet pipe 44 which leads the incoming water into an annular inlet chamber 46 surrounding the filter bristles 22 which depend from the annular clip 24 supported in a groove formed in the lid 42. The bristles span substantially the full height of the chamber 46. An annular wall upstand 41 overlaps the lower ends of the bristles 22 and acts to prevent undue deflection thereof and to trap filtered particles. After passing through the primary filter provided by the bristles 22, the water enters an water enters an annular space 48 surrounding a foam filter cartridge 50 best shown in Figure 6. The water flows radially inwardly through the annular wall of the filter cartridge 50, reaching a central vertical passage 52 leading to an outlet pipe 54 disposed centrally in the lid 42.

## Claims

1. A filter comprising a plurality of filamentary filter elements each in the form of a linear, or strip, filamentary filter element, the elements extending in generally parallel directions and being mounted upon or retained by a mounting element.

2. A filter according to claim 1, wherein the filamentary elements extend substantially normal, or transversely, to the longitudinal axis of the mounting element which is elongate.

3. A filter according to claim 2, wherein the mounting element is an elongate U-section clip having spaced limbs which embrace the filter elements.

4. A filter according to claim 3, wherein depending ends of the filter elements remote from the mounting element are embraced and held together by a further clip.

5. A filter element according to claim 1, wherein the mounting element is substantially circular and the filter elements depend therefrom in an annular curtain.

6. A filter according to any of the preceding claims, wherein the filter elements are bristles of a plastics material.

7. A filter assembly comprising a container with a water inlet and a water outlet, a filter according to any of the preceding claims supported in the container so as to present to the incoming water flow a primary filter for removing comparatively large particles from the water flow, and a secondary filter disposed within the container downstream of the primary filter, the secondary filter being operative to remove comparatively small particles from the water flow.

8. A filter assembly according to claim 7, wherein the secondary filter comprises open-celled foam material.

9. A filter assembly according to claim 7, wherein the container has an inlet chamber to which the water is admitted from the inlet, the filter elements spanning or substantially spanning the full height of the chamber.

10. A filter assembly according to claim 9, wherein the inlet chamber is annular and surrounds the primary filter which is annular, the primary filter surrounding the secondary filter.
